Europäisches Patentamt

European Patent Office

Office européen des brevets

(11) Publication number: **0 144 837**
**A2**

# EUROPEAN PATENT APPLICATION

(21) Application number: **84113851.4**

(22) Date of filing: **16.11.84**

(51) Int. Cl.⁴: **G 01 S 13/93**

(30) Priority: **28.11.83 US 555890**

(43) Date of publication of application:
**19.06.85 Bulletin 85/25**

(84) Designated Contracting States:
**AT BE CH DE FR GB IT LI LU NL SE**

(71) Applicant: **SOLITRON DEVICES, INC.**
**1177 Blue Heron Blvd.**
**Riviera Beach Florida 33404(US)**

(72) Inventor: **Adams, Guy E.**
**602 Anita St.Apt.25**
**Chula Vista California 92011(US)**

(72) Inventor: **Friedman, Benjamin**
**1420 North Oceanway, Apt.15c**
**Jupiter Florida 33458(US)**

(74) Representative: **von Raffay, Vincenz, Dipl.-Ing. et al,**
**Patentanwälte Raffay, Fleck & Partner Postfach 32 32 17**
**D-2000 Hamburg 13(DE)**

(54) An electronic vehicle position indicator.

(57) A vehicle position indicator system utilizing microwave detection of nearby vehicles is disclosed. The system includes two slot receiver antennas formed in the longitudinal extremities of a bumper of a vehicle and a slot transmitter antenna formed in the bumper between the two slot receiver antennas. The slot transmitter antenna is driven by an amplitude modulated signal, and the slot receiver antennas drive respective direct conversion receiving circuits. Since, each slot receiver antenna drives one of two identical receiver circuits, the approach direction of another vehicle can be detected and displayed to the driver. Each receiver circuit includes a mixer for mixing the received amplitude modulated microwave signal with a locally generated microwave signal, thus for detecting the modulated signal. Each mixer is followed by an audio amplifier and active filter for passing only the modulated signal. The active filter outputs drive respective Schmitt triggers which in turn drive respective indicators to indicate that the other vehicle is approaching the rear of the vehicle from either the left or right. A summation circuit is driven by both receiving circuits such that when both receiving circuits are receiving reflected signals, an indicator is activated to indicate that the other vehicle is approaching the center of the vehicle.

FIG. 3.

EP 0 144 837 A2

## BACKGROUND OF THE INVENTION

The present invention relates to a system for informing the driver of a vehicle that another vehicle is approaching, and more particularly, to a vehicular microwave frequency system including slot antennas for transmitting and receiving microwave signals to detect the presence of another vehicle within the range of the system. Application of microwave electronics to vehicles has been cumbersome, primarily because of the construction and required placement of the microwave antennas. Thus, improvements in adapting microwave antennas to vehicles, especially automobiles, greatly enhances the practical use of vehicle microwave electronic systems and advantages achieved thereby.

## SUMMARY OF THE INVENTION

Accordingly, one object of this invention is to provide a vehicular electronic system for detecting an approaching vehicle.

Another object of this invention is to provide a vehicular electronic system for detecting the direction of an approaching vehicle.

Another object of the present invention is to provide a vehicular microwave system for detecting an approaching vehicle.

A further object of the present invention is to provide a vehicular microwave system employing slot-antennas for detecting an approaching vehicle.

Still a further object of the present invention is to provide a reliable, low cost vehicular microwave system for detecting an approaching vehicle.

In accordance with the present invention, the foregoing and other objects are achieved by an electronic vehicle position indicator system comprising a slot transmitter and receiver antenna means, positioned on a vehicle, for transmitting and receiving a predetermined microwave signal; circuit means, operatively connected to the slot transmitter and receiver antenna means, for driving the slot and receiver antenna means with the predetermined microwave signal and detecting the received predetermined microwave signal and generating a drive signal responsive to the received predetermined microwave signal; and indicator means, operatively connected to the circuit means, for indicating the presence and position of another vehicle in accordance with the drive signal.

In a preferred embodiment of the present invention, the electronic vehicle position indicator system comprises a slot transmitter antenna means formed in a metal portion of the vehicle for transmitting a predetermined microwave signal; first and second slot receiver antenna means formed in the metal portion and on opposite sides of and at equal distances from the slot transmitter antenna means, for receiving the predetermined microwave signal; oscillator means for generating a local microwave signal; modulator means for producing a low frequency modulation control signal output; power amplifier means, operatively connected to the slot transmitter antenna means, to the modulatator means and to the oscillator means, for amplifying the local microwave signal in accordance with the modulation control signal output, and for applying the amplified signal to the slot transmitter antenna means, the amplified microwave local signal corresponding to the predetermined microwave signal; detector means, operatively connected to the slot receiver

antenna means, for detecting the predetermined microwave signal and for providing a detect signal responsive to the low frequency modulation control signal; trigger means having a trigger level and being connected to the detector means, for generating a drive signal responsive to the detect signal being greater than the trigger level; and indicator means, operatively connected to receive the drive signal, for indicating the presence of a vehicle in accordance with the drive signal.

## BRIEF DESCRIPTION OF THE DRAWINGS

The accompanying drawings, which are incorporated in and constitute a part of the specification, illustrate an embodiment of the invention and, together with the description, serve to explain the principles of the invention.

Fig. 1 is a partial end view of a vehicle showing a preferred position on the vehicle for the slot transmitter and receiver antennas of the vehicle position indicator system in accordance with the present invention;

Fig. 2 is an isometric view of the portion of the vehicle in Fig. 1 showing a predetermined microwave signal shield of the vehicle position indicator system between the bumper and the vehicle;

Fig. 3 is a schematic block diagram of the vehicle position indicator system embodying the present invention; and

Fig. 4 illustrates an embodiment of the indicator means of the vehicle position indicator system in accordance with the present invention.

## DESCRIPTION OF THE PREFFERED EMBODIMENTS

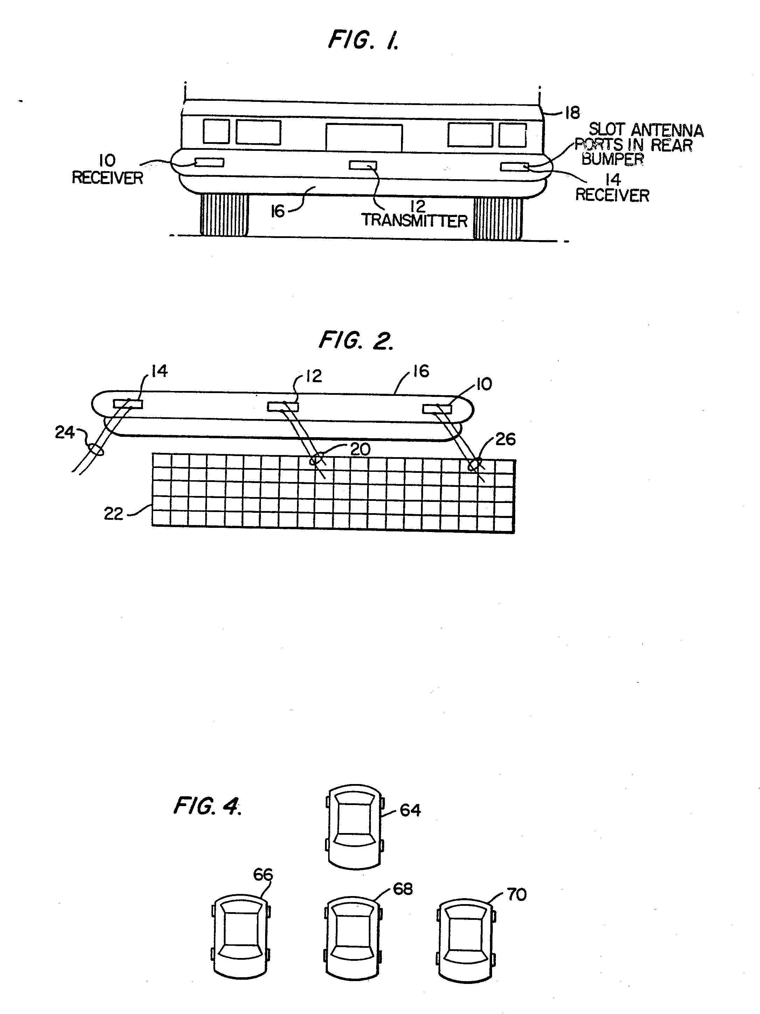

In the preferred embodiment of the vehicle position indicator system, the slot transmitter and receiver means comprises slot antennas 10, 12, and 14 located at the positions on a vehicle such as illustrated in Fig. 1. That is, the slot antennas 10, 12 and 14, are formed in the bumper 16 of an automobile 18 for detecting the presence of an approaching or nearby vehicle at the rear of the vehicle 18. Slot antennas 10 and 14 are located at the ends of the bumper for receiving a predetermined microwave signal, while slot antenna 12 is for transmitting a predetermined microwave signal and is located in the center of the bumper. As an example, the slot antennas could be formed by stamping the slots out of a metal portion of the bumper 16.

Locating the slot antennas in the bumper of the automobile maximizes the possibility of the slot receiver antennas 10 and 14 receiving a signal reflected from metal in a nearby vehicle. Specifically, while many modern cars are formed substantially of non-metal material, the axles and drive trains are almost uniformly formed of metal. Thus, even if an approaching vehicle were a rear engine car, the front axle would still constitute a sufficient metallic surface to reflect a predetermined microwave signal transmitted from slot transmitter antenna 12 back to the slot receiver antennas 10 and 14.

To minimize the cost of the circuitry in the preferred embodiment of the present invention, the location of slot receiver antennas 10 and 14 with respect to the slot transmitter antenna 12 should be carefully controlled. Specifically, the two slot receiver antennas 10 and 14 should be placed at equal distances from the slot transmitter antenna 12. This placement

- 4 -

minimizes and equalizes the effect of any leakage transmission from the slot transmitter antenna 12 that may be directly received by slot receiver antennas 10 and 14. Of course, the spacing of the slot antennas can be uniformly and effectively controlled when the slot antennas are stamped out of the metal portion of the bumper during mass production of the vehicle.

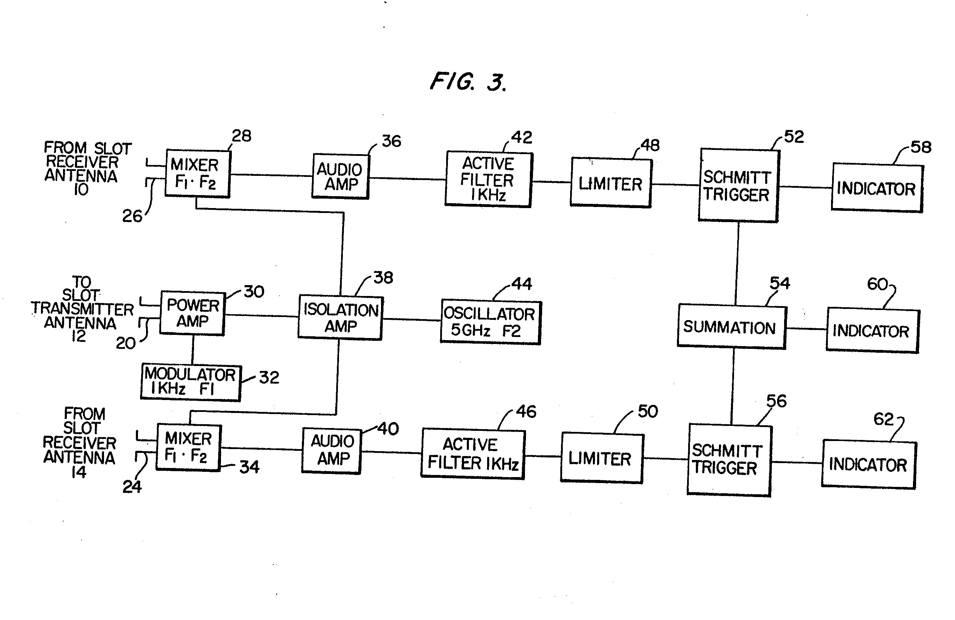

Additionally, the location of the slot receiver antennas 10 and 14 as shown in Fig. 1 and described above gives the vehicle indicator system of this invention a directional capability. That is, an approaching or nearby vehicle positioned near the driver side of the vehicle 18 will reflect a transmitted signal more strongly to slot receiver antenna 10 than to slot receiver antenna 14. Accordingly, the electronics of the present system (illustrated in Fig. 3) can detect and indicate to the driver the direction from which a vehicle is approaching.

In the preferred embodiment and as illustrated in Fig. 2, the vehicle indicator system further comprises a predetermined microwave signal shield 22 positioned between the bumper 16 and the vehicle. The shield 22 prevents transmissions from slot transmission antenna 12 from reaching other metal parts of the vehicle 18 and being reflected therefrom back to the slot receiver antennas 10 and 14. Fig. 2 also illustrates the connection of a transmission feeder line 20 from a power amplifier 30 as shown in Fig. 3 and described hereinafter, to the slot transmitter antenna 12, and the connection of slot receiver feeder lines 24 and 26 respectively from the slot receiver antennas 14 and 10 to mixers 34 and 28, as shown in Fig. 3 and described hereinafter.

While it is preferred to locate the slot receiver and transmitter antennas of this system in the bumper of a vehicle, these antennas can be located in another portion of the vehicle. For instance, the antennas could be located in the sheet metal surrounding the tail lights and license plates, or in the trunk sheet metal. Additionally, the front bumper, grill or hood could also be used as the portion of the vehicle for locating the slot antennas. The critical factor in choosing the location for the slot antennas is to maximize the probability of the transmitted signal being reflected from metal portions of nearby vehicles to be detected. Thus, positioning of the slot antennas toward the lower part of the vehicle is preferable since all nearby or approaching motor vehicles have metal axles.

Fig. 3 is a schematic block diagram of the circuit means of the electronic vehicle position indicator system of the present invention. The circuit means is operatively connected to the slot transmitter and receiver antenna means, for driving the slot transmitter and receiver antenna means with the predetermined microwave signal, for detecting the received predetermined microwave signal and for generating a drive signal responsive to the received predetermined microwave signal. The circuit means is also operatively connected to the indicator means for applying the drive signal to the indicator means to indicate the presence of another vehicle in accordance with the drive signal. As shown in Fig. 3, the circuit means includes an oscillator 44 preferably selected to have a 5 GHz frequency. This frequency is selected to be within the C band, having a frequency ranging from 4 GHz - 8 GHz. The frequency of signal of the oscillator 44, however, could be selected from another frequency band, such as the L, S or X bands.

Since an object of the present invention is a low cost microwave system, the oscillator 44 is not crystal controlled,

- 6 -

and consequently may vary in frequency if loaded down by the circuit components that oscillator 44 drives. Consequently, the circuit means of this system further includes an isolation amplifier 38 to minimize the effect of the following circuit components on the oscillator 44. The output of the isolation amplifier 38 drives a mixer 28, a power amplifier 30 and a mixer 34.

As illustrated in Fig. 3, the output of oscillator 44, after being amplified by isolation amplifier 38, is applied directly to power amplifier 30. The power amplifier 30 amplifies the local microwave signal produced by oscillator 44, and applies the amplified signal to the transmission feeder line 20 which in turn, drives the slot transmitter antenna 12. A modulator 32 produces a low frequency modulation control signal output for varying the amplification of the power amplifier 30. Thus, the amplified signal applied to feeder line 20 is amplitude modulated by the low frequency modulation control signal. As illustrated, a frequency of 1 KHz is preferably used as the modulation signal. However, any audio frequency could be substituted for the 1 KHz modulation signal.

Since the amplified local microwave signal is modulated by the low frequency signal (e.g., 1 KHz), the frequency spectrum of the signal applied to the slot transmitter antenna 12 comprises an impulse at the carrier frequency (e.g., 5 GHz) and two impulses on either side of the carrier frequency (i.e., at the carrier frequency minus the audio frequency and at the carrier frequency plus the audio frequency). In the preferred embodiment, the modulation is 30% amplitude modulation.

When the predetermined microwave signal transmitted from slot antenna 12 (corresponding to the signal from feeder line 20)

- 7 -

is reflected from a metal portion of a nearby vehicle, the reflected signal is received at either slot receiver antenna 10 or 14, or at both slot receiver antennas 10 and 14. Since the receiver paths are identical, only the receiver path including slot receiver antenna 10 will be discussed.

In general, the transmitted amplitude modulated signal can be represented by equation 1:

$$f(t) = k \ (1 + \cos w_m t) \ \cos w_c t \qquad (1)$$

In equation 1, $w_m$ corresponds to the audio frequency and $w_c$ corresponds to the local microwave signal. Since the mixer 28, connected to antenna 10 by feeder line 26, multiplies the received signal of equation 1 by the local microwave signal, the output of the mixer 28 is represented by equation 2:

$$f \ (t) \ \cos w_c t = k \ (1 + \cos w_m t) \ \cos^2 w_c t \qquad (2)$$

Expanding equation 2 using the triganometric identity of $\cos^2 x = 1/2 \ (1 - \cos 2x)$ yields equation 3:

$$\frac{k}{2} + \frac{k \cos w_m t}{2} - \frac{k}{2} \ [ \ \cos 2 \ w_c t + \cos w_m t \ \cos 2 \ w_c t] \qquad (3)$$

Since an amplifier 36, connected to the output of mixer 28, is designed to amplify only audio frequencies, a secondary effect of this amplifier is that it tends to filter out high frequency signals. Consequently, the last term of equation 3 is attenuated by the audio amplifier 36. Additionally, an active filter 42, connected to the output of amplifier 36, has a bandwidth which is equal to or adjusted to primarily pass the audio frequency (in

- 8 -

this case 1 KHz) so as to filter out any remaining portion of the last term of equation 3. Thus, the output of the active filter 42 can be represented by equation 4 where A represents the gain of the audio amplifier 36:

$$\frac{A\ K}{K} \cos w_m t \qquad (4)$$

A limiter 48, connected to the output of filter 42, acts to limit the amplitude of the output of the active filter 42. Thus, for strong signals generated by reflections from nearby vehicles, the limiter 48 clips the amplitude of the low frequency signal produced by the active filter 42. This results in a signal having a maximum amplitude being applied to a Schmitt trigger 52 connected to the output of the limiter 48.

The Schmitt trigger 52 has a threshold selected such that the Schmitt trigger is not triggered by whatever leakage transmission is received by slot receiver antenna 10. In addition to the filtering function of the Schmitt trigger 52, the trigger 52 introduces hysteresis into the system. The hysteresis tends to eliminate flickering of the indicator means of this system (e.g., indicators 58 - 62 shown in Fig. 3) due to a vehicle being detected at or near the maximum range of the system. Thus, the hysteresis of the Schmitt trigger 52 enables the system to capture an approaching vehicle and indicate its presence within the range of the system, even though the distance between the approaching vehicle and the receiver antenna varies. An additional function of the Schmitt trigger 52 is to drive both indicator 58 and a summation circuit 54 as will be further described below.

In the embodiment of the electronic vehicle position indicator system of the present invention as illustrated in Fig. 3, the function of the circuitry in the receiver path including slot receiver antenna 14, is the same as that in the receiver path including slot receiver antenna 10. Thus, audio amplifier 40 functions in a manner similar to audio amplifier 36, active filter 46 operates in a manner similar to active filter 42, limiter 50 operates in a manner similar to limiter 48 and Schmitt trigger 56 operates in a manner similar to Schmitt trigger 52.

In a preferred embodiment of this electronic vehicle position indicator system capable of indicating the directional position of approaching vehicle, the indicator means comprises three indicators 58, 62 and 60, respectively connected to the outputs of the Schmitt triggers 52 and 56, and the summation circuit 60. In one embodiment of the indicators 58 and 62, these indicators are LEDs driven by the respective outputs of the Schmitt triggers 52 and 56. When not detecting the presence of a nearby or approaching vehicle, the LEDs are off. When the slot receiver antennas 10 and 14 receive the predetermined microwave signal, however, the corresponding Schmitt triggers drive the respective LEDs with the audio frequency signal. Consequently, when a nearby or approaching vehicle is detected, the appropriate LED appears to be constantly on because the output of the corresponding Schmitt trigger is in the audio frequency signal range.

The summation circuit 54 performs a logical AND function between the outputs of the Schmitt trigger 52 and Schmitt trigger 56. Thus, if a vehicle is in a position such that a signal is reflected to both slot receiver antenna 10 and slot receiver antenna 14, both receiver paths will be processing a received signal. Consequently, both Schmitt trigger 52 and Schmitt trigger 56 will drive the summation circuit 54. The output of the summation circuit 54 drives indicator 60, which in one embodiment of the present invention comprises a LED. Since the summation circuit 54 performs the logical AND function, the indicator 60 is driven only when both receiving paths of slot antennas 10 and 14 are receiving predetermined microwave signals. Consequently, the output of the summation circuit 54 indicates to the driver, by way of activation of indicator 60, that a vehicle is approaching along a line roughly in the center of the vehicle 18 shown in Fig. 1.

Since the outputs of the Schmitt triggers 52 and 56, and the output of the summation circuit 54 are in the audio frequency range, this signal can be divided down such that the indicators 58, 60 and 62 operate in a visible blinking mode rather appearing to be continuously on whenever a vehicle comes within the range of the system. Futhermore, the outputs of the Schmitt triggers 52 and 56 can be filtered and applied to a circuit performing a function, such as a derivative, to detect when a vehicle is approaching at a rapid rate; thus, indicating to the driver a potential danger situation.

Fig. 4 illustrates an embodiment of the indicator means of the present invention including a portion of the dash board in the vehicle 18. In this figure each of the areas identified by reference numerals 64, 66, 68, and 70 represents a top view of an automobile, with reference numeral 64 representing the vehicle 18, and reference numerals 66, 68 and 70 respectively corresponding to the indicators 58, 60 and 62 of Fig. 3. Each of the indicators 66, 68 and 70 can, for example, be back lit by a LED respectively driven by the Schmitt trigger 52, summation circuit 54 and Schmitt trigger 56. Thus, if a vehicle were

- 11 -

approaching from the driver's side, indicator 66 would light, while if a vehicle were approaching from the passenger side, indicator 70 would light. Finally, if a vehicle were approaching along a center line between the slot receiver antennas 10 and 14, indicator 68 would light. Additionally, if a derivative circuit were connected to the outputs of the Schmitt trigger 52 and 56 to detect a vehicle approaching at a rapid rate, this would cause the indicator 64 to light. Activating indicator 64 together with the appropriate directional indicator 66, 68 or 70 not only indicates the direction of the approaching vehicle, but also that the vehicle is approaching quickly. Finally, if a vehicle is approaching along a center line, all of the indicators 58, 60, and 62 shown in Fig. 3, or the corresponding indicators 66, 68 and 70 in the Fig. 4 embodiment, would light.

In view of the the foregoing, it can be seen that it is intended that the present invention cover the modifications and variations to the vehicle position indicator system in accordance with the invention as defined by the appended claims and their equivalents, without limitation to the preferred embodiments discussed herein.

0144837

1. An electronic vehicle position indicator system comprising:

slot transmitter and receiver antenna means, positioned on a vehicle, for transmitting and receiving a predetermined microwave signal;

circuit means, operatively connected to said slot transmitter and receiver antenna means, for driving said slot transmitter and receiver antenna means with said predetermined microwave signal, for detecting said received predetermined microwave signal and for generating a drive signal responsive to said received predetermined microwave signal; and

indicator means, operatively connected to said circuit means, for indicating the presence of another vehicle in accordance with said drive signal.

2. An electronic vehicle position indicator system according to claim 1, wherein said circuit means includes means for detecting the approach direction of said other vehicle, and for varying said drive signal in accordance with the detected approach direction, and wherein said indicator means includes means for indicating the approach direction of said other vehicle.

3. An electronic vehicle position indicator system according to claim 1, wherein said circuit means includes means for generating an amplitude modulated microwave signal, said modulated signal corresponding to said predetermined microwave signal.

4. An electronic vehicle position indicator system according to claim 2, wherein said circuit means includes means for generating an amplitude modulated microwave signal, said modulated signal corresponding to said predetermined microwave signal.

5. An electronic vehicle position indicator system according to claim 3, wherein said slot transmitter and receiver antenna means is formed in a metal portion of the vehicle.

6. An electronic vehicle position indicator system according to claim 4, wherein said slot transmitter and receiver antenna means is formed in a metal portion of the vehicle.

7. An electronic vehicle position indicator system according to claim 2, wherein said slot transmitter and receiver antenna means comprises a slot transmitter antenna and two slot receiver antennas positioned on opposite sides of said slot transmitter antennas and at equal distances from said slot transmitter antenna.

8. An electronic vehicle position indicator system according to claim 5, further comprising a predetermined microwave signal shield positioned between said slot transmitter and receiver antenna means and the vehicle.

9. An electronic vehicle position indicator system according to claim 7, further comprising a predetermined microwave signal shield positioned between said slot transmitter and receiver antenna means and the vehicle.

10. An electronic vehicle position indicator system comprising:

slot transmitter antenna means positioned on a vehicle, for transmitting a predetermined microwave signal;

slot receiver antenna means, positioned on the vehicle for receiving the predetermined microwave signal;

oscillator means for generating a local microwave signal;

modulator means for producing a low frequency modulation control signal output;

power amplifier means, operatively connected to said slot transmitter antenna means, to said modulator means and to said oscillator means, for amplifying said local microwave signal in accordance with said modulation control signal and for applying said amplified local microwave signal to said slot transmitter antenna, said amplified local microwave signal corresponding to said predetermined microwave signal;

detector means, operatively connected to said slot receiver antenna means, for detecting said predetermined microwave signal and for providing a detect signal responsive to said low frequency modulation control signal;

trigger means having a trigger level and being connected to said detector means, for generating a drive signal responsive to the detect signal being greater than the trigger level; and

indicator means, operatively connected to receive said drive signal, for indicating the presence of another vehicle in accordance with said drive signal.

11. An electronic vehicle position indicator system according to claim 10, wherein said detector means comprises means for detecting the directional position of the other vehicle and for varying said detect signal in accordance with the detected directional position, and wherein said indicator means includes means for indicating the directional position of the other vehicle.

12. An electronic vehicle position indicator system according to claim 10, wherein the slot transmitter antenna means and the slot receiver antenna means are formed in a metal portion of the vehicle.

13. An electronic vehicle position indicator system 0144837 according to claim 11, wherein the slot transmitter antenna means and the slot receiver antenna means are formed in a metal portion of the vehicle.

14. An electronic vehicle position indicator system according to claim 10, wherein said slot receiver antenna means comprises two slot receiver antennas positioned on opposite sides of and at equal distances from said slot transmitter antenna means.

15. An electronic vehicle position indicator system according to claim 11, wherein said slot receiver antenna means comprises two slot receiver antennas positioned on opposite sides of and at equal distances from said slot transmitter antenna means.

16. An electronic vehicle position indicator system according to claim 12, wherein said system further comprises a predetermined microwave signal shield positioned between said metal portion of the vehicle and the vehicle.

17. An electronic vehicle position indicator system according to claim 13, wherein said system further comprises a predetermined microwave signal shield positioned between said metal portion of the vehicle and the vehicle.

18. An electronic vehicle position indicator system according to claim 10, wherein said detector means includes a first position means for detecting the directional position of the other vehicle being the rear right of the vehicle and a second position means for detecting the directional position of the other vehicle being the rear left of the vehicle.

19. An electronic vehicle position indicator system according to claim 18, further including summation means operatively connected to said first position means and to said second position means, for detecting the directional position of the other vehicle being substantially directly behind the vehicle.

20. An electronic vehicle position indicator system according to claim 19, wherein said indicator means comprises three indicator circuits respectively responsive to said first position means, said second position means and said summation means.

**FIG. 1.**

18

SLOT ANTENNA
PORTS IN REAR
BUMPER

10
RECEIVER

14
RECEIVER

16

12
TRANSMITTER

**FIG. 2.**

14   12   16   10

24   20   26

22

**FIG. 4.**

64

66   68   70

FIG. 3.

2/2

0144837